# EUROPÄISCHE PATENTSCHRIFT

(11) **EP 0 450 324 B1**
(45) Veröffentlichungstag und Bekanntmachung des Hinweises auf die Patenterteilung: **20.07.1994**
(21) Anmeldenummer: 91103289.4
(22) Anmeldetag: 05.03.1991
(51) Int. Cl.: B60N 2/22

(54) **Taumelgetriebe für einen verstellbaren Fahrzeugsitz**
Rocking gearing for an adjustable vehicle seat
Engrenage oscillant pour un siège réglable de véhicule

(30) Priorität: 16.03.1990 DE 9003097 U
(43) Veröffentlichungstag der Anmeldung: 09.10.1991
(73) Patentinhaber: C. Rob. Hammerstein GmbH, D-42699 Solingen (DE)
(72) Erfinder: Bauer, Heinz, W-5650 Solingen 11 (DE); Becker, Burckhard, W-5650 Solingen 11 (DE); Frohnhaus, Ernst-Reiner, W-5650 Solingen 11 (DE)
(74) Vertreter: Bauer, Wulf, Dr.

(56) Entgegenhaltungen:
- DE-A- 2 556 271
- DE-A- 3 214 592
- FR-A- 2 236 108
- FR-A- 2 326 308
- US-A- 4 880 274

## Beschreibung

Die Erfindung bezieht sich auf ein Taumelgetriebe nach dem Oberbegriff des Patentanspruchs 1.

Bei dem aus der DE-A-3 214 592 vorbekannten Taumelgetriebe der eingangs genannten Art wird mittels eines Kulissengetriebes die Bewegung des Stirnrades auf das zweite Gelenkteil übertragen. Das Kulissenteil ist im Kraftfluß zwischen Stirnrad und zweitem Gelenkteil angeordnet. Dadurch wird mit geringem Materialaufwand einerseits eine einfache und zuverlässige Kraftübertragung zwischen dem losen Stirnrad und dem zweiten Gelenkteil erreicht, andererseits bewirkt das Kulissengetriebe, daß die zweite Welle nicht gegenüber der ersten Welle exzentrisch auswandert.

Weiterhin ist aus der FR-A-2 236 108 ein Taumelgetriebe bekannt, das bis auf zwei separate Wellen die Merkmale des eingangs genannten Taumelgetriebes aufweist.

Taumelgetriebe der eingangs genannten Art haben den Vorteil, im Kraftrückflußweg zu sperren, also irreversibel zu sein. Eine einmal vorgenommene Einstellung der mit dem Exzenter verbundenen Welle läßt sich durch ein Drehmoment, das an der anderen Welle angreift, nicht verändern.

Dies ist für Feststellvorrichtungen von Fahrzeugsitzen grundsätzlich von großer Bedeutung, derartige Verstellvorrichtungen müssen sowohl einals auch feststellbar sein.

Nun erweist sich jedoch im praktischen Betrieb des Taumelgetriebes der eingangs genannten Art, daß bei Rüttelbewegungen, wie sie in Kraftfahrzeugen auftreten, eine selbsttätige Verstellung auftritt, beispielsweise wenn das Taumelgetriebe der eingangs genannten Art für einen Rückenlehnenbeschlag eingesetzt wird. Im Gegensatz zu kontinuierlich angreifenden Kräften im Kraftrückflußwege, die zu keiner Verstellung führen, bewirken ruckartig angreifende Kräfte ungewünschte Verstellungen. Für Verstellvorrichtungen von Fahrzeugsitzen ist dies nachteilig.

Hier setzt nun die Erfindung ein. Sie hat es sich zur Aufgabe gemacht, das Taumelgetriebe der eingangs genannten Art dahingehend weiterzubilden, daß es auch unter den praktischen Bedingungen, die in einem Kraftfahrzeug auftreten, irreversibel bleibt und spielfreier als das vorbekannte Taumelgetriebe ist.

Ausgehend von dem Taumelgetriebe mit den Merkmalen der eingangs genannten Art wird diese Aufgabe gelöst durch ein Taumelgetriebe mit den Merkmalen des Patentanspruchs 1.

Bei einer vollen Umdrehung des Exzenters bewegt sich das Kulissenteil auf einer linienförmigen Bahn einmal hin und her, der Bewegungshub beträgt das zweifache der Exzentrizität. Durch die zweite Längsführung wird die Taumelbewegung des taumelnden Verzahnungsteils, beispielsweise des Stirnrades, nur insoweit auf das Kulissenteil übertragen, als sich die Taumelbewegung in Richtung der ersten Längsführung erstreckt. Durch das Kulissenteil wird erreicht, daß ein im Kraftrückflußwege angreifendes Drehmoment auch dann, wenn es rüttelnd, also intermittierend, an der Ausgangswelle angreift, nicht eine Verstellung der Eingangswelle bewirken kann. Ein derartiges, an der Ausgangswelle angreifendes Drehmoment läßt sich im Bereich der beiden Längsführungen in Komponenten zerlegen, die rechtwinklig zur Führungsrichtung der jeweiligen Längsführung angreifen. Das Taumelgetriebe nach der Erfindung ist damit wesentlich spielfreier als die Taumelgetriebe der eingangs genannten Art.

Das erfindungsgemäße Taumelgetriebe eignet sich sowohl für handbetätigte als auch für motorisch angetriebene Verstellvorrichtungen. Ein Anwendungsfall für ein handbetätigtes Taumelgetriebe nach der Erfindung ist beispielsweise ein Lehnengelenkbeschlag entsprechend dem Beschlag der eingangs genannten Art. Wenn das erfindungsgemäße Taumelgetriebe als Untersetzungsgetriebe für einen Elektromotor benutzt wird, wird zwischen Ausgangswelle des Elektromotors und Eingangswelle des Taumelgetriebes ein Untersetzungsgetriebe zwischengeschaltet. Für dieses Getriebe können Kunststoffzahnräder eingesetzt werden, aufgrund der hohen Drehzahl, mit der die Zahnräder umlaufen, sind die Drehmomente so gering, daß sie über Kunststoffzahnräder übertragen werden können. Dies fördert zudem einen geräuscharmen Lauf.

In einer vorzugsweisen Ausführung wird die erste Längsführung gebildet durch zwei einander gegenüberliegende Gleitflächen des Kulissenteils, die an entsprechend ausgebildeten Führungsflächen des Getriebegehäuses spielfrei anliegen und einen außerhalb des Innenzahnkranzes befindlichen, parallel zu den Gleitflächen verlaufendes Langloch, in das ein gehäusefester Stift eingreift. Dabei sorgt die Verbindung zwischen Stift und Langloch im wesentlichen für eine Verdrehsicherung des Kulissenteils, die Anordnung aus den Gleitflächen und den Führungsflächen erzwingt im Zusammenhang mit dieser Verdrehsicherung die gewünschte Linearbewegung des Kulissenteils bei Antrieb der Eingangswelle.

Dabei ist in vorteilhafter Weiterbildung der Exzenter mit einem Zahnrad einstückig verbunden, das seinerseits mit einem Ritzel in Eingriff steht, dessen Achse durch den Stift gebildet wird. Auf diese Weise kann der Stift eine Doppelfunktion ausüben.

Das erfindungsgemäße Taumelgetriebe läßt sich sehr klein und mit geringem Gesamtgewicht aufbauen. Dabei werden in bekannter Weise durch das Taumelgetriebe sehr hohe Untersetzungen erreicht.

In vorteilhafter Weiterbildung haben die Vorsprünge schließlich einen quadratischen Querschnitt. Hierdurch haben sie relativ große Abstütztflächen an den Innenwänden der Ausnehmungen.

Weitere Vorteile und Merkmale der Erfindung ergeben sich aus den übrigen Ansprüchen sowie der nun folgenden Beschreibung von nicht einschränkend zu verstehenden Ausführungsbeispielen, die unter Bezugnahme auf die Zeichnung näher erläutert werden. In dieser zeigen:
- Fig. 1: eine Draufsicht auf eine prinzipielle Darstellung eines Taumelgetriebes, im Sinne eines Schnittes entlang der Schnittlinie I - I in Fig. 2,
- Fig. 2: ein Schnittbild des Taumelgetriebes gemäß Fig. 1 entsprechend der Schnittlinie II - II,
- Fig. 3: eine Draufsicht auf ein Kulissenteil für ein zweites Ausführungsbeispiel des Taumelgetriebes,
- Fig. 4: eine Draufsicht auf ein Getriebegehäuse mit Vorgetriebe und
- Fig. 5: ein Kulissenteil entsprechend Fig. 3, jedoch mit anderer Ausbildung einer ersten Längsführung.

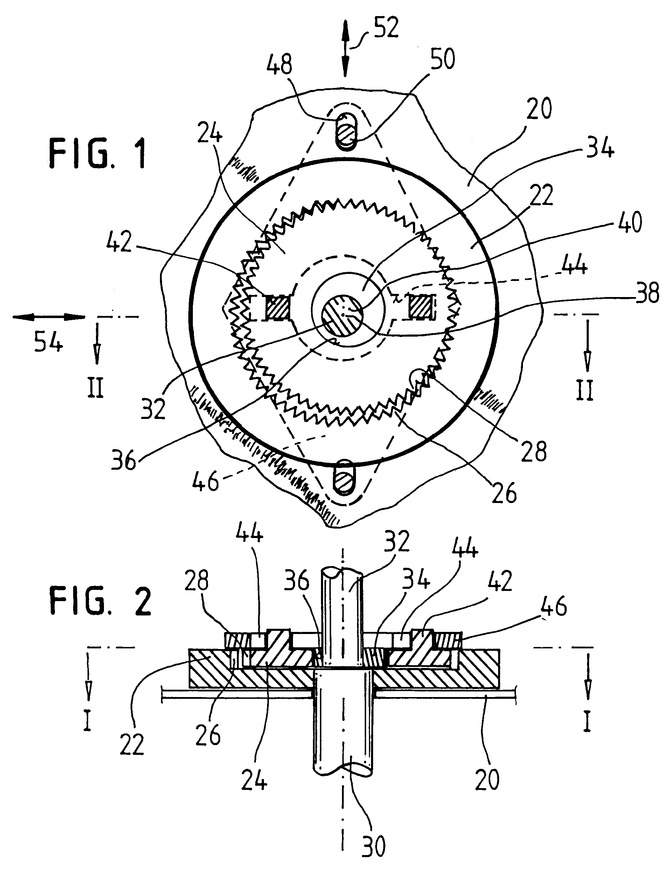

In einem im Ausführungsbeispiel nach den Figuren 1 und 2 nur angedeuteten Getriebegehäuse 20 befinden sich ein Innenzahnkranz 22 und ein mit diesem im Eingriff stehendes Stirnrad 24, das innerhalb des Innenzahnkranzes 22 angeordnet ist. Beide haben eine Verzahnung, mit 26 sind die Zähne des Innenzahnkranzes 22 bezeichnet, die Bezugsziffer 28 steht für die Zähne des Stirnrades 24. Wie ansich bekannt, ist der Kopfkreisdurchmesser der Verzahnung des Stirnrades 24 etwa um das 1,5-fache der Zahnhöhe kleiner als der Fußkreisdurchmesser der Verzahnung des Innenzahnkranzes 22.

Der Innenzahnkranz 22 ist mit einer Ausgangswelle 30 verbunden. Gleichachsig zu dieser verläuft eine Eingangswelle 32. Sie ist mit einem Exzenter 34 drehverbunden, der in eine Bohrung 36 des Stirnrades 24 greift und dadurch das Stirnrad 24 lagert. Diese Bohrung 36 ist bezogen auf das Stirnrad 24 konzentrisch. Die Innenfläche der Bohrung 36 bildet eine ringförmige Exzenterfläche aus.

Die Exzentrizität des Exzenters 34 ist aus Fig. 1 ersichtlich. Dort ist mit 38 das Zentrum des Innenzahnkranzes 22 bezeichnet, es liegt auf den Achslinien der beiden Wellen 30, 32. 40 ist der Mittelpunkt des Stirnrades 24 und des kreisförmigen Exzenters 34. Der Abstand beider Punkte ist das Maß der Exzentrizität.

Das Stirnrad 24 hat zwei symmetrisch und diametral gegenüberliegend angeordnete Vorsprünge 42 quadratischen Querschnitts von baugleicher Ausbildung. Sie greifen in jeweils eine, ihnen exakt angepaßte Ausnehmung 44 eines Kulissenteils 46 ein, das sich in der gezeigten Ausführungsform oberhalb der Ebene befindet, in der Stirnrad 24 und Innenzahnkranz 22 angeordnet sind und das plattenförmig ausgeführt ist.

Dieses Kulissenteil 46, das im gezeigten Ausführungsbeispiel rautenförmig ist, in der praktischen Ausführung jedoch jede andere beliebige Form annehmen kann, hat zwei außenliegende Langlöcher 48, in die Stifte 50 angepaßten Durchmessers eingreifen, die mit dem Getriebegehäuse 20 verbunden sind. Wie Fig. 1 zeigt, befinden sich die Stifte 50 außerhalb des Innenzahnkranzes 22.

Die Anordnung aus den beiden Stiften 50 und den sie aufnehmenden Langlöchern 48 bewirkt eine erste Längsführung, das Kulissenteil 46 kann sich gegenüber dem Getriebegehäuse 20 nur in einer ersten Richtung 52 (siehe Doppelpfeil) bewegen.

Die Anordnung aus den Vorsprüngen 42 und den sie aufnehmenden Ausnehmungen 44 stellt eine zweite Längsführung dar, die eine 90 Grad zur ersten Richtung 52 verlaufende Führungsrichtung 54 (zweite Richtung) hat. Beide Richtungen 52, 54 verlaufen in einer Radialebene.

Die zweite Längsführung 48, 50 bewirkt, daß von der kreisförmigen Taumelbewegung des Stirnrades 24, die um einen Kreis mit dem Radius der Exzentrizität um das Zentrum 38 erfolgt, nur diejenigen Bewegungskomponenten auf das Kulissenteil 46 übertragen werden, die in der ersten Richtung 52 verlaufen. Bewegungskomponenten der Taumelbewegung, die in der zweiten Richtung 54 verlaufen, führen dagegen zu einer Relativbewegung zwischen Stirnrad 24 und Kulissenteil 46.

Beim praktischen Betrieb laufen folgende Vorgänge ab: Wird die Eingangswelle 32 gedreht, so dreht sich der Exzenter 34. Er bewirkt eine Taumelbewegung des Stirnrades 24 innerhalb des Innenzahnkranzes 22. Bei einer vollständigen Drehung um 360 Grad der Eingangswelle 32 beschreibt der Mittelpunkt 40 des Stirnrades 24 einen Kreisbogen. Durch die zweite Längsführung 42, 44 wird dabei das Kulissenteil 46 mitbewegt, das jedoch durch die erste Längsführung 48, 50 gegenüber dem Getriebegehäuse 20 abgestützt ist. Durch diese beiden Längsführungen macht das Kulissenteil 46 bei einer vollständigen Umdrehung der Eingangswelle 32 eine hin- und hergehende Bewegung in der ersten Richtung 52 und über die doppelte Exzentrizität, diese Bewegung ist eine Projektion einer Sinuskurve, deren Amplitude die Exzentrizität ist.

Aufgrund der Untersetzung zwischen Innenzahnkranz 22 und Stirnrad 24 dreht sich bei der beschriebenen Bewegung der Eingangswelle 32 die Ausgangswelle 30 mit geringerer Winkelgeschwindigkeit. Es lassen sich große Übersetzungen erreichen, wenn die Differenz der Zahnzahlen gering ist.

Die Ausbildung der beiden Längsführungen ist grundsätzlich beliebig. Die erste Längsführung muß lediglich sicherstellen, daß sich das Kulissenteil 46 über einen Weg, der der doppelten Exzentrizität entspricht, nur in der ersten Richtung 52 gegenüber dem Getriebegehäuse 20 bewegen kann. Ebenso muß die zweite Längsführung bei beliebiger Konstruktion lediglich sicherstellen, daß sich Stirnrad 24 und Kulissenteil 46 lediglich in der zweiten Richtung 54 relativ gegeneinander bewegen können, wobei wiederum der Bewegungsweg der doppelten Exzentrizität entspricht.

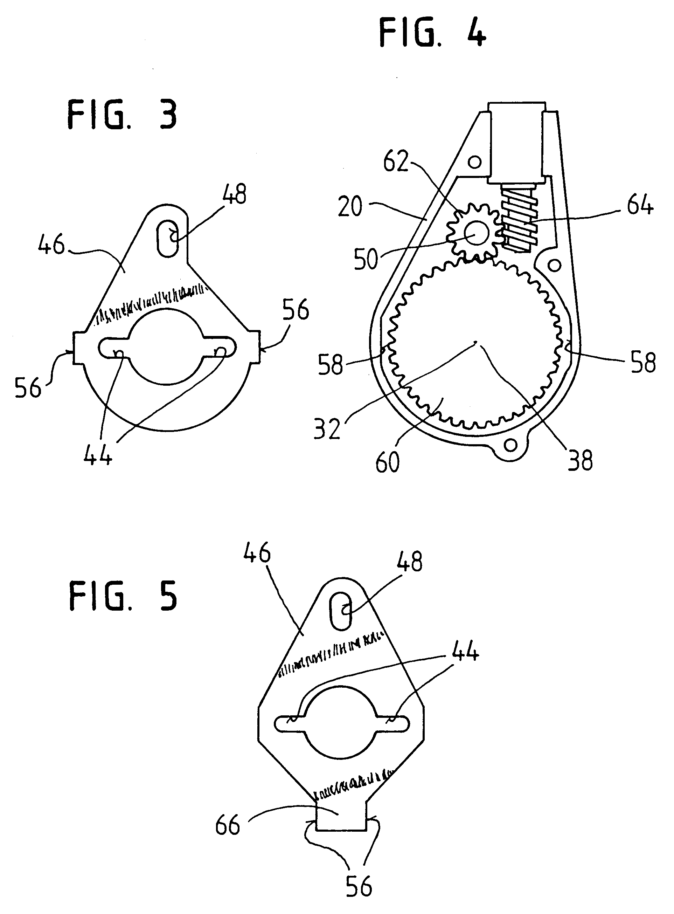

Die Figuren 3 und 4 zeigen Details eines praktischen Ausführungsbeispiels. Bei dem Kulissenteil 46 nach Fig. 3 sind Ausnehmungen 44 vorgesehen, die entsprechend dem Ausführungsbeispiel nach den Figuren 1 und 2 ausgeführt sind, demgemäß hat auch das zum zweiten Ausführungsbeispiel zugehörige Stirnrad (nicht dargestellt) quadratische Vorsprünge, die aus seiner Ebene wegstehen.

Geändert ist jedoch die erste Längsführung. Im gezeigten Ausführungsbeispiel hat das Kulissenteil 46 zwei diametral gegenüberliegende, außenliegende Gleitflächen 56, die mit entsprechenden Führungsflächen 58 des Getriebegehäuses 20 zusammenwirken und im wesentlichen eine Querbewegung (quer zu den Flächen 56, 58) des Kulissenteils 46 ausschließen. Vervollständigt wird diese erste Längsführung durch ein Langloch 48, durch das ein Stift 50 greift, der am Getriebeghäuse 20 befestigt ist.

In Fig. 4 ist das Getriebegehäuse 20 ohne abschließenden Deckel dargestellt. Mit der Eingangswelle 32 des eigentlichen Taumelgetriebes ist ein Stirnzahnrad 60 drehverbunden, das seinerseits mit einem Ritzel 62 kämmt. Letzteres ist auf den Stift 50 gesteckt, der somit Doppelfunktion hat. Das Ritzel 62 befindet sich in Eingriff mit einer Schnecke 64. Die Teile 60 bis 64 sind aus Kunststoff gefertigt.

Im Ausführungsbeispiel nach Fig. 5 sind im Gegensatz zur Ausbildung nach Fig. 3 die Gleitflächen 56 nicht diametral angeordnet, vielmehr springt gegenüberliegend des Langlochs 48 eine Nase 66 vor, die mit ihren seitlichen Flächen die Gleitflächen 56 bildet. Im Getriebegehäuse 20 ist ein entsprechender Fortsatz vorgesehen, der nicht dargestellt ist, er bildet entsprechende Führungsflächen 58 aus.

In den gezeigten Ausführungsbeispielen lagert die Eingangswelle 32 über den Exzenter 34 stets das Innenzahnrad 22. In einer geänderten Ausführung kann jedoch auch der Exzenter 34 den Innenzahnkranz 22 lagern, der dadurch beim praktischen Betrieb gegenüber dem zentrisch bleibenden Stirnrad 24 taumelt. In diesem Fall ist die zweite Längsführung zwischen dem Innenzahnkranz 22 und dem Kulissenteil 46 ausgebildet.

## Patentansprüche

1. Taumelgetriebe für einen verstellbaren Fahrzeugsitz mit einem Innenzahnkranz (22) und einem mit diesem in Eingriff stehendem Stirnrad (24), das innerhalb des Innenzahnkranzes (22) angeordnet ist und einen Kopfkreisdurchmesser hat, der mindestens um die Zahnhöhe kleiner ist als der Fußkreisdurchmesser des Innenzahnkranzes (22), wobei der Innenzahnkranz (22), alternativ das Stirnrad (24), mit einer ersten Welle (30) verbunden ist und das Stirnrad (24), alternativ der Innenzahnkranz (22), eine ringförmige Exzenterfläche (Bohrung 36) aufweist, die einen Exzenter (34) lagert, der mit einer zweiten, gleichachsig zur ersten Welle (30) verlaufenden Welle (32) drehverbunden ist und eine der Differenz von Fuß- und Kopfkreisdurchmesser angepaßte Exzentrizität hat, und wobei ein Kulissenteil (46) vorgesehen ist, das einerseits in einer ersten radialen Richtung (52) durch eine erste Längsführung (48, 50; 56, 58) geführt ist und andererseits mit dem Stirnrad (24), alternativ mit dem Innenzahnkranz (22), über eine zweite Längsführung (42, 44) in Eingriff steht, die in einer zweiten, radialen Richtung (54) verläuft, welche mit der ersten Richtung (52) einen möglichst großen Winkel einschließt, und wobei die Führungslänge beider Längsführungen der doppelten Exzentrizität entspricht,
**dadurch gekennzeichnet,**
daß ein Getriebegehäuse (20) vorgesehen ist, in dem die erste Welle (30) und die zweite Welle (32) gelagert sind und daß die erste Längsführung des Kulissenteils (46) am Getriebegehäuse (20) ausgebildet ist und zwei Gleitflächen (56) des Kulissenteils (46) aufweist, die an Führungsflächen (58) des Getriebegehäuses (20) anliegen.

2. Taumelgetriebe nach Anspruch 1, dadurch gekennzeichnet, daß die erste Längsführung des Kulissenteils (46) weiterhin ein außerhalb des Innenzahnkranzes (22) befindliches, parallel zu den Gleitflächen (56) verlaufendes Langloch (48) des Kulissenteils (46) aufweist, in das ein gehäusefester Stift (50) eingreift.

3. Taumelgetriebe nach Anspruch 1, dadurch gekennzeichnet, daß die zweite Längsführung zwei diametral gegenüberliegende Vorsprünge (42) aufweist, welche in Ausnehmungen (44) greifen, die in der zweiten Richtung (54) verlaufen.

4. Taumelgetriebe nach Anspruch 2, dadurch gekennzeichnet, daß die Vorsprünge (42) einen rechteckförmigen, vorzugsweise quadratischen Querschnitt aufweisen.

5. Taumelgetriebe nach einem der Ansprüche 1 bis 4, dadurch gekennzeichnet, daß der ersten Welle (32) ein Vorgetriebe vorgeschaltet ist.

6. Taumelgetriebe nach Anspruch 5, dadurch gekennzeichnet, daß das Vorgetriebe Zahnräder bzw. Schnecken (60 bis 64) aufweist, die aus Kunststoff gefertigt sind.

7. Taumelgetriebe nach Anspruch 5, dadurch gekennzeichnet, daß der Exzenter (34) mit einem Stirnzahnrad (60) einstückig verbunden ist.

8. Taumelgetriebe nach einem der Ansprüche 1 bis 7, dadurch gekennzeichnet, daß der Exzenter (34) aus Kunststoff gefertigt ist.

## Claims

1. Tumble gearing for an adjustable vehicle seat, having an internal ring gear (22) and a spur gear (24) meshing with said ring gear, the spur gear being arranged within the internal ring gear (22) and having an addendum circle diameter smaller at least by the tooth depth than the dedendum circle diameter of the internal ring gear (22), the internal ring gear (22) or alternatively the spur gear (24) being connected to a first shaft (30) and the spur gear (24) or alternatively the internal ring gear (22) having a ring-shaped eccentric surface (bore 36) carrying an eccenter (34), said eccenter being connected in a revolving joint to a second shaft (32) which extends co-axially to the first shaft (30), and having an eccentricity adapted to the difference between the addendum and dedendum circle diameters, a slotted piece (46) being provided which on the one hand is guided in a first radial direction (52) by a first longitudinal guide (48, 50; 56, 58) and on the other hand engages with the spur gear (24), alternatively with the internal ring gear (22), via a second longitudinal guide (42, 44) which extends in a second radial direction (54) having as large an angle as possible to the first direction (52), the guide length of the two longitudinal guides corresponding to twice the eccentricity,
characterized in that
a gearing housing (20) is provided carrying the first shaft (30) and the second shaft (32), and that the first longitudinal guide of the slotted piece (46) is formed on the gearing housing (20) and includes two sliding surfaces (56) of the slotted piece (46), which rest on guide surfaces (58) of the gearing housing (20).

2. Tumble gearing according to Claim 1, characterized in that the first longitudinal guide of the link part (46) further has a slot (48) in the slotted piece (46) located outside the internal ring gear (22) and extending parallel to the sliding surfaces (56), in which a pin fixed rigidly to the housing (50) engages.

3. Tumble gearing according to Claim 1, characterized in that the second longitudinal guide has two diametrically opposed projections (42) which engage in recesses (44) extending in the second direction (54).

4. Tumble gearing according to Claim 2, characterized in that the projections (42) are rectangular, and preferably square, in cross-section.

5. Tumble gearing according to one of Claims 1 to 4, characterized in that an intermediate gear precedes the first shaft (32).

6. Tumble gearing according to Claim 5, characterized in that the intermediate gear has gears or worms (60 to 64) fabricated from plastic.

7. Tumble gearing according to Claim 5, characterized in that the eccenter (34) forms a single-piece unit with a spur gear (60).

8. Tumble gearing according to one of Claims 1 to 7, characterized in that the eccenter (34) is fabricated from plastic.

## Revendications

1. Engrenage de basculement pour un siège de véhicule reglable avec une couronne dentée intérieure (22) et, engrenée à celle-ci, une roue dentée extérieure (24) disposée à l'intérieur de la couronne dentée intérieure (22) et ayant un diamètre de tête au moins plus petit de la hauteur de dent que le diamètre de pied de la couronne dentee intérieure (22), la couronne dentée intérieure (22), alternativement la roue dentée extérieure (24), étant reliée avec un premier arbre (30) et la roue dentée extérieure (24), alternativement la couronne dentée intérieure (22), présentant une surface excentrique annulaire (trou 36) accueillant un excentrique (34) relié par rotation à un deuxième arbre (32) allant dans le même axe que le premier arbre (30) et ayant une excentricité adaptée à la différence entre le diametre de tête et de pied et, étant prévue une partie à coulisse (46) guidée, d'un côté, dans une première direction radiale (52) par un premier guidage longitudinal (48, 50; 56, 58) et, d'un autre côté, étant engrenée à la roue dentée extérieure (24), alternativement à la couronne dentée intérieure (22), par l'intermédiaire d'un deuxième guidage longitudinal (42, 44) allant dans une deuxième direction radiale (54) enfermant avec la premiere direction (52) le plus grand angle possible et, la longueur de guidage des deux guidages longitudinaux correspondant à la double excentricité,
caractérisé en ce
qu'est prévu un carter de protection (20) dans lequel sont logés le premier arbre (30) et le deuxième arbre (32) et que le premier guidage longitudinal de la partie à coulisse (46) est formé au carter de protection (20) et présente deux surfaces de frottement (56) de la partie à coulisse (46) reposant sur des surfaces de guidage (58) du carter de protection (20).

2. Engrenage de basculement selon la revendication 1, caractérisé en ce que le premier guidage longitudinal de la partie à coulisse (46) présente de plus un trou longitudinal (48) de la partie à coulisse (46) se trouvant à l'extérieur de la couronne dentée intérieure (22) allant parallèlement aux surfaces de frottement (56) dans lequel est en prise une goupille (50) fixée au carter.

3. Engrenage de basculement selon la revendication 1, caractérisé en ce que le deuxième guidage longitudinal présente deux parties saillantes (42) diamétralement opposées étant en prise dans des creux (44) allant dans la deuxième direction (54).

4. Engrenage de basculement selon la revendication 2, caractérisé en ce que les parties saillantes (42) présentent une section rectangulaire, de préférence carrée.

5. Engrenage de basculement selon l'une des revendications 1 à 4, caractérisé en ce qu'un pré-mécanisme est placé en amont du deuxième arbre (32).

6. Engrenage de basculement selon la revendication 5, caractérisé en ce que le pré-mécanisme présente des roues dentées voire des vis sans fin (60 à 64) fabriquées en matière plastique.

7. Engrenage de basculement selon la revendication 5, caractérisé en ce que l'excentrique (34) est relié d'une seule pièce à la roue dentée extérieure (60).

8. Engrenage de basculement selon l'une des revendications 1 à 7, caractérisé en ce que l'excentrique (34) est fabriqué en matière plastique.
